Europäisches Patentamt

**European Patent Office**

Office européen des brevets

(11) Veröffentlichungsnummer: **0 165 386**
**B1**

(12) **EUROPÄISCHE PATENTSCHRIFT**

(45) Veröffentlichungstag der Patentschrift:
29.11.89

(51) Int. Cl.⁴: **G 05 B 19/10**

(21) Anmeldenummer: 85103629.3

(22) Anmeldetag: 27.03.85

(54) Verfahren und Speichersystem zum Speichern von Einstellwerten für Stellvorrichtungen an Druckmaschinen.

(30) Priorität: 26.04.84 DE 3415500
16.03.85 DE 3509633

(43) Veröffentlichungstag der Anmeldung:
27.12.85 Patentblatt 85/52

(45) Bekanntmachung des Hinweises auf die Patenterteilung:
29.11.89 Patentblatt 89/48

(84) Benannte Vertragsstaaten:
FR GB IT SE

(56) Entgegenhaltungen:
EP-A- 0 135 881
DE-A- 2 813 420
DE-A- 2 852 941
DE-A- 3 111 177
DE-A- 3 220 803
DE-A- 3 242 551
GB-A- 2 136 635
US-A- 3 838 412
US-A- 4 144 485
US-A- 4 196 418
US-A- 4 310 754
US-A- 4 326 261
US-A- 4 366 542
US-A- 4 482 947
PATENTS ABSTRACTS OF JAPAN, Band 7, Nr. 121
(P-199) [1266], 25 Mai 1983; & JP - A - 58 39 308

(73) Patentinhaber: Heidelberger Druckmaschinen
Aktiengesellschaft,
Kurfürsten-Anlage 52-60 Postfach 10 29 40,
D-6900 Heidelberg 1 (DE)

(72) Erfinder: Lange, Peter, Nelkenstrasse 9, D-6901 Mauer
(DE)

(74) Vertreter: Stoltenberg, Baldo Heinz-Herbert, c/o
Heidelberger Druckmaschinen AG
Kurfürsten-Anlage 52-60, D-6900 Heidelberg 1 (DE)

## Beschreibung

Verfahren und Speichersystem zum Speichern von Einstellwerten für Stellvorrichtungen an Druckmaschinen, insbesondere von Verfahrens-, Programm-, und Befehlsabläufen, sowie von allgemeinen Daten und Werten, unter Verwendung einer Speichereinrichtung mit Speicherelementen, vorzugsweise elektrisch betriebenen Festkörperspeicher-Elementen, und zumindest einer Vorrichtung zum Kommunizieren mit der Speichereinrichtung und zum Verarbeiten der Speicherinformationen.

Aus der DE-OS 3 111 177 ist eine Steuereinrichtung für Druckmaschinen bekannt, bei der Voreinstellwerte für das Farbwerk abgespeichert werden. Bei den hierzu verwendeten Lochstreifen, Schreib/Lese-Speichern, Ferritkern-Speichern und Magnetblasen-Speichern handelt es sich jedoch durchweg um passive Speicherelemente, die zudem teilweise sehr kostspielig und teilweise nicht, bzw. nur schwer transportabel sind. In der Regel erfolgt die Stromversorgung sowie die Steuerung dieser Speicherelemente mittels einer Vielzahl von Leitungen über Kontakte. Der Einsatz eines Magnetblasen-Speichers erfordert aufgrund dessen aufwendiger Steuerlogik beispielsweise eine sehr stromintensive Speisung dessen Steuerung.

Bei Speichereinrichtungen der eingangs genannten Art ist ein bidirektioneller Datenverkehr zwischen der Speichereinrichtung und der Druckmaschine erforderlich, so dass beim Auslesen aus der Speichereinrichtung elektrische Signale in die Druckmaschine geleitet werden und beim Beschreiben der Speichereinrichtung elektrische Signale in dieselbe gelangen müssen.

Aus der gleichen zuvor erwähnten Druckschrift sind jedoch auch Speichereinrichtungen bekannt, die nicht die Zuführung elektrischer Signale erfordern. Es handelt sich hierbei um Magnetplatten oder Magnetbänder, deren Nachteile jedoch unter anderem darin bestehen, dass sie insbesondere auch infolge des mechanischen Kontaktes mit dem Aufnahme- und Wiedergabekopf relativ störanfällig sind und ausserdem einen mechanischen Antrieb erfordern, ganz abgesehen von deren Störanfälligkeit infolge Staub, Schmutz, Öl und Feuchtigkeit. Besonders Letzterer muss in einer Druckerei besondere Beachtung gezollt werden, da die dort erforderliche konstante Luftfeuchtigkeit Anlass zu Störungen bei der Anwendung von Magnetplatten- bzw. Bändern geben könnte.

Aus der DE-A 2 852 941 ist ein Speichersystem in einer Bankkarte bekannt. Diese Bankkarte enthält jedoch ebenfalls nur einen passiven Speicher. In Verbindung mit einer zusätzlichen Datenstation kann dieser passive Speicher aktiviert werden.

Ein Speichersystem, welches bei Druckmaschinen angewendet wird, ist aus der DE-A 3 220 803 bekannt. Die dort beschriebene Druckmaschinensteuerung verwendet zur Übertragung von Daten eine Diskette.

Der Nachteil einer solchen Diskette ist, wie bei Magnetplatten oder Magnetbändern, die hohe Empfindlichkeit und die damit verbundene aufwendige Handhabung.

Der Erfindung liegt die Aufgabe zugrunde, im Gegensatz zu den eingangs beschriebenen passiven Speicherelementen ein aktives, intelligentes Speichermedium in kompakter Bauform zu schaffen, das ohne das Erfordernis mechanisch reibender oder berührender Elemente zum Datenverkehr sowie zur Energiezufuhr weitgehend störsicher und wartungsfrei arbeitet und unviersell anwendbar ist.

Erfindungsgemäss wird diese Aufgabe durch die Merkmale des Anspruchs 1 gelöst.

Vorrichtungsmässig besteht die Lösung der Aufgabe nach Anspruch 3 darin, dass die Speichereinrichtung als transportabler Datenspeicher ausgebildet und mit zumindest einem Dateneingang in Form zumindest eines berührungslos arbeitenden Sensors und mit zumindest einem Datenausgang in Form zumindest eines berührungslos abtastbaren Ausgabeelementes ausgestattet ist, dass in der Speichereinrichtung eine von aussen berührungslos speisbare Energieversorgungseinrichtung vorgesehen ist, und dass mit den Speicherelementen eine logische Entscheidungen treffende elektronische Steuervorrichtung (elektronisches Rechensystem) gekoppelt ist, wobei die Vorrichtung zum Kommunizieren mit der Speichereinrichtung vorzugsweise an der Druckmaschine angeordnet ist.

Der Vorteil der Erfindung liegt darin, dass sowohl zur Datenübertragung als auch zur Energieversorgung keine elektrisch leitenden Verbindungen zwischen der Druckmaschine und der Speichereinrichtung erforderlich sind. Derartige elektrische Verbindungen sind bekanntermassen sehr störanfällig infolge Verschmutzung, Korrosion, Oxydation, Verkleben, Durchschmoren usw. Diesem Umstand kommt insbesondere im Zusammenhang mit der Druckmaschine besondere Bedeutung zu, da durch den dort bearbeitungsbedingt auftretenden Papierstaub, Alkoholzusätze im Feuchtmittel sowie im Wischwasser, Druckfarbenlösungsmittel usw., bzw. durch deren Verdunstung sich eine besonders aggressive und gefährliche Umgebungsatmosphäre bilden kann. Dies stellt den Einsatz von Kontakten in Steuer- und Datenleitungen mehr und mehr in Frage, da infolge der Möglichkeit der Bildung von «Funkenstrecken» die Gefahr von Verpuffungen gefährlicher Luft-Staubgemische oder deren Entflammung nicht ganz auszuschliessen ist.

Da die elektronische Steuervorrichtung integraler Bestandteil der Speichervorrichtung ist und selbst logische Entscheidungen treffen kann, vereinfacht sich der Datenverkehr zur Druckmaschine. Aufgrund der intelligenten, selbständigen Datenverwaltung ist im einfachsten Fall der seriellen Datenübertragung in der Speichereinrichtung lediglich ein einziger Sensor und ein einziges Ausgabeelement erforderlich, um die Daten dennoch richtig aus einer Vielzahl von Speicherelementen auszulesen bzw. richtig in eine Vielzahl von Speicherelementen einzuschreiben. Durch Überprüfung der Wertebereiche, Plausibilitätsprüfung, Fehlererkennung- und Korrektur, wird ein Höchstmass an Übertragungssicherheit erreicht.

Obwohl der seriellen Datenübertragung der Vorzug gegeben wird, wird eine parallele Datenübertragung ebenfalls in Betracht gezogen. Es könnte dann zweckmässig sein, jeweils mindestens acht Bits der Information parallel zu übertragen. In diesem Fall wäre es angebracht, eine entsprechende Anzahl von Sensoren und Ausgabeelementen vorzusehen.

Zusammenfassend vereinigt somit die Erfindung den Vorteil der Festkörperspeicherelemente – das Fehlen beweglicher Teile – mit dem Vorteil herkömmlicher Magnetbandkassetten – das Nichterfordernis von aussen zugänglicher elektrischer Signalleitungen an der Speichereinrichtung – wobei auf jeglichen mechanisch reibenden oder berührenden Kontakt zwischen Speichermedium und Aufzeichnungseinheit bzw. zwischen der Energieversorgungseinrichtung der Speichereinheit und der korrespondierenden Energiespeichereinrichtung verzichtet wird.

Um die Bauform der Speichereinrichtung so kompakt wie möglich und deren Herstellungskosten gering zu halten, wird für die Stromversorgung und/oder Dateneingabe und/oder Datenausgabe ein und dasselbe Übertragungssystem benutzt, wodurch der Ausnutzungsgrad der vorhandenen elektronischen Bauteile maximiert wird.

Zur Erhöhung des Informationsgehaltes ist in Weiterbildung des Erfindungsgedankens die Speichereinrichtung und/oder die Vorrichtung zum Kommunizieren mit der Speichereinrichtung mit einer Anzeigevorrichtung ausgestattet, in der Speicherinformationen in numerischer und/oder graphischer Form, automatisch oder manuell ausgelöst, darstellbar sind. Diese Anzeige ermöglicht es dem Bediener der Druckmaschine, wichtige Speicherinformationen direkt abzulesen, beispielsweise die Nummer eines Druckauftrages, oder dass der Speicherinhalt gelöscht und somit zur Aufzeichnung eines beliebigen Druckprogrammes zur Verfügung steht.

Eine vorteilhafte Ausgestaltung der Erfindung zeichnet sich dadurch aus, dass die Speichereinrichtung und/oder die Einrichtung zum Kommunizieren mit der Speichereinrichtung mit einer manuellen Eingabeeinheit ausgestattet ist. Damit könnte der Bediener der Druckmaschine nach Bedarf beispielsweise den Speicherinhalt löschen bzw. als ungültig kennzeichnen oder gar einen bereits abgespeicherten Wiederholauftrag für die Druckmaschine nachträglich mit einer besonderen Kennzeichnung versehen, die ursprünglich nicht von der Druckmaschine selbst automatisch abgespeichert wurde.

Damit die manuelle Eingabeeinheit auch härtesten Praxisanforderungen gerecht wird, ist sie mit einer Folientastatur ausgestattet, deren Vorteil neben einer besonders geringen Bauhöhe darin besteht, insbesondere das Gehäuse der Speichereinrichtung gegenüber ihrer Umgebung vollkommen staub- und flüssigkeitsdicht und somit relativ störunanfällig zu gestalten.

Zwecks universeller Anwendbarkeit ist zumindest der Dateneingang (Sensor) der Speichereinrichtung derart ausgebildet, dass diese als Bar-Code-Leser anwendbar ist, wobei die elektronische Steuervorrichtung mit einem zugehörigen Auswerteprogramm versehbar ist, ggf. können Dateneingang und Datenausgang der Speichereinrichtung zusammen als Bar-Code-Leser ausgebildet sein.

Damit eine bestmögliche Ausnutzung der elektronischen Bauteile zwecks Geringhaltung der Herstellungskosten gewährleistet ist, sind der Dateneingang (Sensor) und/oder der Datenausgang (Ausgabeelement) und/oder der Eingang der Energieversorgungseinrichtung identisch, wobei die Speicherinformation dem Energieträger aufmoduliert ist. Dadurch erübrigt sich entweder eine separate Hardware ausschliesslich für den Datenverkehr oder eine separate Hardware ausschliesslich zur Energieversorgung.

Eine zweckmässige Ausgestaltung der Erfindung besteht darin, dass der Sensor ein lichtempfindliches Element ist. Da dabei vorzugsweise auf eine Photodiode oder einen Phototransistor zurückgegriffen wird, ist dann das mit dem Sensor zusammenwirkende Sendeelement an der Einrichtung zum Kommunizieren mit der Speichereinrichtung in der Druckmaschine als lichtemitierendes Element, vorzugsweise als Leuchtdiode, ausgebildet.

Bei einer Ausführungsform der Erfindung ist das Ausgabeelement ein lichtemittierendes oder durch Licht abtastbares Element. Im ersten Fall kann es sich hierbei insbesondere um eine Leuchtdiode handeln, im zweiten Fall um ein Flüssigkristallelement, das je nach der auszugebenden Information beispielsweise auffallendes Licht reflektiert oder nicht reflektiert. Die Vorrichtung zum Kommunizieren mit der Speichereinrichtung – vorzugsweise an der Druckmaschine – müsste dann zum Abtasten eines derartigen Flüssigkristallelementes mit einer Lichtquelle und ein das reflektierte Licht empfangender Lichtempfänger ausgestattet sein.

Eine Weiterbildung des Erfindungsgedankens besteht darin, dass der Sensor und/oder das Ausgabeelement induktiv oder kapazitiv ansteuerbar bzw. abtastbar ist. Diese Elemente können beispielsweise Induktionsspulen bzw. metallisch leitende Flächen sein, die mit einer Induktionsspule bzw. einer Gegenelektrode in der Vorrichtung zum Kommunizieren mit der Speichereinrichtung – vorzugsweise an der Druckmaschine – angeordnet zusammenwirken.

Gemäss einer anderen Ausführungsform der Erfindung ist es zweckdienlich, dass der Sensor ein Mikrophon und das Ausgabeelement ein Schallsender ist, wodurch die Datenübertragung rein akkustisch vorgenommen werden kann. Hierzu bietet sich eine Frequenz im Ultraschallbereich an, da Schall in diesem Bereich vom Menschen nicht wahrnehmbar ist.

Zwecks Erweiterung des Aktionsradius und der universellen Anwendbarkeit ist gemäss einer bevorzugten Ausführungsform der Erfindung zur Erzeugung der Betriebsenergie der Speichereinrichtung Energiestrahlung vorgesehen, wobei die Stromversorgungseinrichtung mit einem strahlungsempfindlichen Element gekoppelt ist, das durch eine ausserhalb der Speichereinrichtung angeordnete Strahlungsquelle bestrahlbar ist. Durch diese Anordnung ist es möglich, die Speichereinrichtung zumindest während der Zeit eines Datenaustausches, in der sie sich in Kommunikation mit der Vorrichtung zum Kommunizieren mit der Speichereinrichtung befindet (vorzugsweise an in der Druckmaschine) vom Netz unabhängig zu machen und durch Umwandlung von Licht mit elektrischer Energie zu versorgen. Das Licht kann dabei von einer geeignet positionierten Lichtquelle – beispielsweise innerhalb der Druckmaschine – erzeugt werden. Der Vorteil dieser Anordnung liegt darin, dass bei geeigneter Aufbewahrung der Speichereinrichtung getrennt von der Vorrichtung zum Kommunizieren mit der Speichereinrichtung, d.h. ausserhalb der Druckmaschine, dieses lichtempfindliche Element auch weiterhin elektrische Energie liefern kann, die beispielsweise zur Speisung eines Akkumulators dienen kann und somit die Lebensdauer einer Akkumulatorladung verlängert.

Anstatt Licht kann auch Wärmestrahlung für die Energiezufuhr verwendet werden, wobei in diesem Fall die Wärmeenergie dann auch durch Wärmeleitung übertragen werden kann.

Eine diesbezügliche Ausführungsform besteht darin, dass die Erzeugung der Betriebsenergie der Speichereinrichtung induktiver und/oder kapazitiver Art ist, wobei die Stromversorgungseinrichtung eine Induktionsspule und/oder Kondensatorplatten aufweist, mittels derer von ausserhalb des Speichergehäuses auf induktivem bzw. kapazitivem Weg die Betriebsenergie zuführbar ist. Dabei hat es sich als zweckmässig erwiesen, dass die Induktionsspule bzw. Kondensatorplatten nahe der Innenseite einer Aussenwand des Speichergehäuses angeordnet ist, so dass sie bestmöglich mit einer ausserhalb der Speichereinrichtung angeordneten Induktionsspule bzw. weiteren Kondensatorplatten zusammenwirken kann, die Bestandteil einer externen Energiespeiseeinrichtung ist. Letztere ist zweckmässigerweise in der Vorrichtung zum Kommunizieren mit der Speichereinrichtung angeordnet.

Insbesondere bei Verwendung einer Induktionsspule kann eine erhebliche Leistung berührungsfrei in die Speichereinrichtung übertragen werden, und die von der im Innern der Speichereinrichtung angeordneten Induktionsspule gelieferte Wechselspannung lässt sich durch geeignete Wahl der Windungszahlen in weiten Grenzen auf den im jeweiligen Anwendungsfall gewünschten optimalen Wert bringen. Dies kann insbesondere dann nützlich sein, wenn Speicherelemente verwendet werden, die zum Löschen die Zufuhr einer hohen Spannung von beispielsweise 25 Volt benötigen, wie dies bei elektrisch löschbaren Speichern (EEPROM) zumindest bisher erforderlich ist.

Für den zuvor bereits angesprochenen Fall, dass der Sensor der Speichereinrichtung ein Mikrophon und das Ausgabeelement ein Schallsender ist, bietet sich auch in vorteilhafter Weise an, dass nicht nur zum Datenverkehr sondern auch zur Erzeugung der Betriebsenergie der Speichereinrichtung Schallenergie vorgesehen ist, wobei die Energieversorgungseinrichtung ein Schallenergie in elektrische Energie umwandelndes Element aufweist, dem von einem ausserhalb der Speichereinrichtung angeordneten Schallsender Schallenergie zuführbar ist.

Die elektrische Betriebsenergie, die insbesondere zum Auslesen des Speicherinhaltes bzw. zum Einspeichern benötigt wird, kann dadurch erzeugt werden, dass in dem Speichergehäuse ein Energiespeicher für die Energieversorgung der Speicherelemente zur Informationserhaltung vorgesehen ist, der vorzugsweise als Batterie ausgebildet ist.

Eine ausgestaltende Ausführungsform der Erfindung kann darin bestehen, dass eine Dupliziereinrichtung zum Vervielfältigen der Speicherinformationen vorgesehen ist, in der sich die Dateneingänge (Sensoren) und Datenausgänge (Ausgabeelemente) zweier Speichereinrichtungen zur Informationsübertragung gegenüberstehen.

Zusätzliche Merkmale und Vorteile der Erfindung ergeben sich aus der nachfolgenden Beschreibung anhand eines in den Zeichnungen dargestellten Ausführungsbeispieles, wobei die einzelnen Merkmale einzeln für sich oder zu mehreren in beliebiger Kombination im Rahmen der Erfindung realisierbar sind. Es zeigt:

Fig. 1 eine schematische Darstellung einer Speichereinrichtung und der mit dieser unmittelbar zusammenwirkenden Einrichtung zum Kommunizieren mit der Speichereinrichtung an der Druckmaschine,

Fig. 2 eine perspektivische Darstellung des Datenspeichers nach Fig. 1,

Fig. 3 ein Flussdiagramm mit einem Ablaufplan des Rahmenprogramms der elektronischen Steuervorrichtung mit selektiver Befehlsauswahl,

Fig. 4 ein Flussdiagramm mit dem Programmablauf der Befehlsausführung «Schreiben» und

Fig. 5 ein Flussdiagramm mit dem Programmablauf der Befehlsausführung «Lesen».

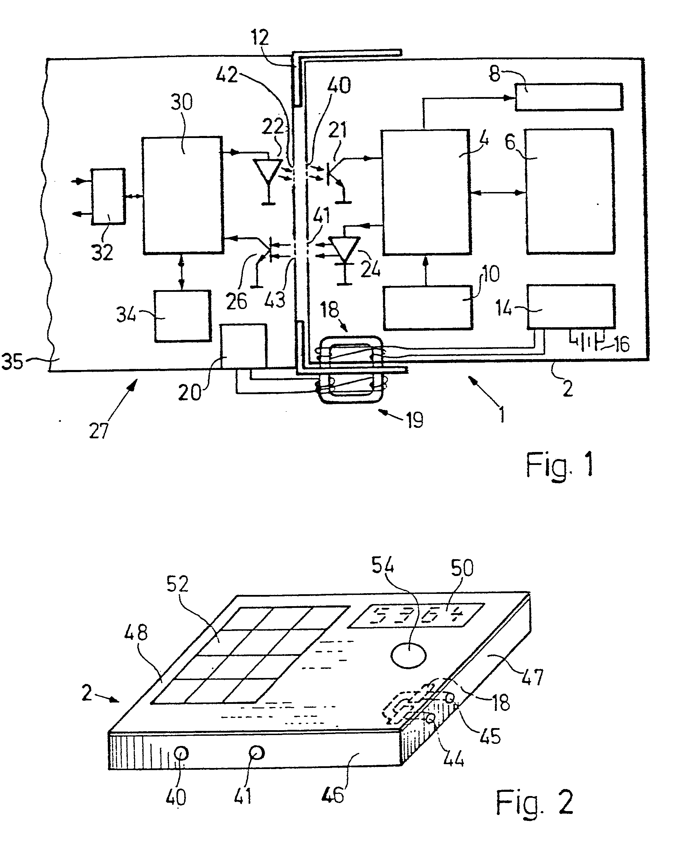

In Fig. 1 sind in einem lediglich als Umfangslinie angedeuteten Gehäuse 2 einer Speichereinrichtung 1 deren verschiedene elektronische Bauelemente angeordnet. Die Speichereinrichtung 1 weist eine als elektronisches Rechnersystem ausgebildete elektronische Steuervorrichtung 4 auf, die intelligenter Art ist und selbständig logische Entscheidungen treffen kann. Die elektronsiche Steuervorrichtung 4 ist mit einem durch Halbleiterschaltungen gebildeten Speicher 6, einer als Flüssigkristallanzeige ausgebildeten Anzeigevorrichtung 8 sowie mit einer Eingabevorrichtung 10 verbunden. Letztere ist mit einer Folientastatur 52 ausgetattet, die an der Aussenseite des weitgehend hermetisch abgeschlossenen Speichergehäuses 2 angeordnet ist.

Die Anzeigevorrichtung 8 ist in nächster Nähe eines durchsichtigen Abschnittes des Gehäuses 2 der Speichereinrichtung 1 angeordnet und automatisch oder manuell auslösbar. Die Speicherinformationen können dabei für den Benutzer wahlweise in numerischer und/oder graphischer Form in einem Anzeigefeld 50 der Anzeigevorrichtung 8 sichtbar gemacht werden, selbst wenn die Speichereinrichtung 1 in eine nur andeutungsweise dargestellte Aufnahmevorrichtung 12 eingesetzt ist, die an der Vorrichtung zum Kommunizieren 27 mit der Speichereinrichtung 1 angeordent ist. Die Vorrichtung zum Kommunizieren 27 mit der Speichereinrichtung 1 ist ihrerseits vorzugsweise in nicht dargestellter und näher beschriebener Weise in der Druckmaschine fixierbar.

Selbstverständlich kann die Vorrichtung zum Kommunizieren 27 mit der Speichereinrichtung 1 auch an einer anderen Maschine, beispielsweise einer Werkzeugmaschine angeordnet werden.

Die Speichereinrichtung 1 weist ausserdem eine Energieversorgungseinrichtung 14 auf, die mit einem internen Energiespeicher 16 gekoppelt ist, der vorzugsweise als Trockenbatterie ausgebildet ist. Ausserdem steht die Energieversorgungseinrichtung 14 mit einer, einen U-förmigen Weicheisenkern aufweisenden Induktionsspule 18 in Verbindung. Die Induktionsspule 18 befindet sich in demjenigen Bereich des Speichergehäuses 2, der in der Aufnahmevorrichtung 12 angeordnet ist.

Die Induktionsspule 18 ist dann, wenn die Speichereinrichtung 1 in die Aufnahmevorrichtung 12 eingeschoben ist, magnetisch mit einer, ebenfalls einen U-Kern aufweisenden Induktionsspule 19 gekoppelt, die Bestandteil einer externen Einergiespeiseeinrichtung 20 ist. Dieser Induktionsspule 19 wird von der Energiespeiseeinrichtung 20 über Eingänge 44 und 45 Wechselstrom zugeführt, sodass die Energieversorgungseinrichtung 14 von der Induktionsspule 18 ebenfalls mit Wechselstromenergie versorgt wird. Hieraus wird die für den Betrieb in der Druckmaschine erforderliche Gleichstromenergie in der Energieversorgungseinrichtung 14 gewonnen. Die Batterie 16 ist solange abgeschaltet, wie der Energieversorgungseinrichtung 14 Wechselstrom zugeführt wird.

Bei anderen Ausführungsformen der Erfindung kann anstatt der als Trockenbatterie ausgebildeten Batterie 16 ein Kleinakkumulator oder ein Kondensator verwendet werden, wobei in diesem Fall die Energieversorgungseinrichtung 14 derart ausgebildet ist, dass sie bei Zuführung von Wechselstrom den Akkumulator bzw. den Kondensator auflädt. Die Energieversorgungseinrichtung 14 steht – in für einen Fachmann bekannter und deshalb nicht näher dargestellter und beschriebener Weise – mit den übrigen elektronischen Bauteilen der Speichereinrichtung 1 in Verbindung.

Die Speichereinrichtung 1, d.h. genauer ausgedrückt, das Speichergehäuse 2 ist mit einem Dateneingang 21 in Form eines berühungslos arbeitenden Sensors und einem Datenausgang 24 in Form eines berührungslos abtastbaren Ausgabeelementes versehen. Als Dateneingang 21 kommt dabei ein als Phototransistor ausgebildeter Lichtempfänger zur Anwendung, der mit einem an der Vorrichtung zum Kommunizieren 27 mit der Speichereinrichtung 1 vorgesehenen Lichtsender 22 in optischer Wirkverbindung steht. Der Ausgang des Lichtempfängers 21 ist auf einen Eingang der elektronsichen Steuervorrichtung 4 gelegt.

Der Datenausgang 24 der Speichereinrichtung 1 bzw. des Speichergehäuses 2 ist als Leuchtdiode ausgebildet und mit einem Ausgang der elektronischen Steuervorrichtung 4 verbunden. Die Leuchtdiode 24 ist mit einem Lichtempfänger 26 der Vorrichtung zum Kommunizieren 27 mit der Speichereinrichtung 1 optisch gekoppelt. Die optische Koppelung wird mittels durchsichtiger Bereiche ermöglicht, die als Sichtfenster 40–43 ausgebildet und sowohl im Speichergehäuse 2 als auch im Gehäuse 35 der Vorrichtung zum Kommunizieren 27 angeordnet sind. Dabei sind die genannten Optoelemente 21 und 24 dicht an der Innenseite des Speichergehäuses 2 und die korrespondierenden Optoelemente 22 und 26 in nächster Nähe an der Innenwand des Gehäuses 35 angeordnet.

Bei einer Ausführungsform der Erfindung wird für die Energieversorgung und/oder Dateneingabe und/oder Datenausgabe ein und dasselbe Übertragungssystem benutzt. In diesem Fall sind der Dateneingang (Sensor 21) und/oder der Datenausgang (Ausgabeelement 24) und/oder der Eingang (42, 43) der Energieversorgungseinrichtung 14 identisch. Zum Datenaustausch wird die Speicherinformation dem jeweiligen Energieträger aufmoduliert, beispielsweise Amplitudenmodulation, Frequenzmodulation o.ä.

Je nach Bedarf ist es auch möglich, die Speichereinrichtung 1 als netzunabhängigen und leitungslosen Bar-Code-Leser zu benutzen. Hierzu muss zumindest der Dateneingang (Sensor 21) der Speichereinrichtung 1 als an sich bekannter Bar-Code-Leser ausgebildet sein. Voraussetzung hierfür ist, dass die elektronische Steuervorrichtung 1 mit dem notwendigen Bar-Code-Auswerteprogramm versehen wurde.

Der Lichtsender 22 und der Lichtempfänger 26 in der Vorrichtung zum Kommunizieren 27 – und somit in der Druckmaschine – stehen mit einer Schaltungsanordnung 30 zur Aufbereitung und Prüfung der Daten in Verbindung, die einerseits aus der Speichereinrichtung 1 ausgelesen werden und andererseits der Daten, die von einer bekannten und deshalb nicht näher dargestellten und gezeichneten Steuervorrichtung der Druckmaschine über eine Schnittstellenschaltung 32 zur Schaltungsanordnung 30 geliefert werden.

Zu Letzterer gehört ausserdem ein Zwischenspeicher 34, in den die mit hoher Geschwindigkeit seriell übertragenen Daten zwischengespeichert werden, um sie leicht überprüfen zu können.

In umgekehrter Weise, nämlich beim Abspeichern von Daten, erfolgt die Datenüberprüfung durch die elektronische Steuervorrichtung 4 der Speichereinrichtung 1. Die selbständige Datenverwaltung mittels der elektronischen Steuervorrichtung 4 schliesst u.a. eine Überprüfung der Wertebereiche der übertragenen Daten, eine Plausibilitätsprüfung, sowie eine Fehlererkennung und eine Fehlerkorrektur ein.

Figur 2 zeigt eine perspektivische Ansicht der Speichereinrichtung. Unmittelbar hinter den Sichtfenstern 40 und 41 an einer Schmalseite 46 des Speichergehäuses 2 befinden sich der Lichtempfänger 21 und der Lichtsender 24. Ebenso ist die Induktionsspule 18 dicht an einer zur Schmalseite 46 quer verlaufenden Schmalseite 47 angeordnet. Auf einer Oberseite 48 des Speichergehäuses 2 sind das Anzeigefeld 50 der Anzeigevorrichtung 8 und die Folientastatur 52 der Eingabevorrichtung 10 angeordnet. Wenn das Speichergehäuse 2 vorzugsweise die Abmessungen einer herkömmlichen Tonbandkassette hat, nämlich $65 \times 45 \times 9$ mm, können dadurch bereits vorhandene mechanische Teile der Aufnahmevorrichtung 12 an Druckmaschinen beibehalten werden, bei denen in herkömmlicher Weise als Speichermedium eine Magnetbandkassette verwendet wird.

Der Speicher 6 der Speichereinrichtung 1 enthält Halbleiter-Speicherelemente für Lese- und Schreibbetrieb (RAM), die in CMOS-Technik hergestellt sind und daher für die Aufrechterhaltung der gespeicherten Informationen nur einen äusserst geringen Strombedarf von höchstens wenigen Mikroampere benötigen. Der Speicher 6 hat im Ausführungsbeispiel eine Kapazität von 256 K-Bytes. Die Intelligenz der elektronischen Steuervorrichtung 4 sorgt auch dafür, dass die vom Sensor 21 empfangenen Informationen in einer genau vorgeschriebenen Reihenfolge in den Speicherelementen des Speichers 6 abgespeichert werden.

Durch die elektronische Steuervorrichtung 4 ist es ausserdem möglich, mittels der Eingabevorrichtung 10 bestimmte vorgegebene Informationen auf der Anzeigevorrichtung 8 in graphischer oder alphanumerischer Form sichtbar zu machen. Im Ausführungsbeispiel ist hierfür vorgesehen, dass beispielsweise die Nummer des Druckauftrages angezeigt werden kann, deren Einstellwerte in der Speichereinrichtung 1 abgespeichert sind, ebenso wie das Datum der Erstellung dieser Daten. Falls die Speichereinrichtung 1 keine gültigen oder überhaupt keine gespeicherten Informationen enthält, wird dies durch eine entsprechende Anzeige im Anzeigefeld 50 ebenfalls sichtbar gemacht.

Die im Speicher 6 der Speichereinrichtung 1 abgespeicherten Daten können aus einer Druckmaschine kommen, auf der erstmals ein Druckauftrag ausgeführt wird, so dass also die gefundenen Einstellwerte zur raschen Ausführung eines Wiederholauftrages in der Speichereinrichtung 1 abgelegt werden können. Die Speicherinformationen können auch von einer anderen Einrichtung, beispielsweise einem Druckplatten-Messgerät stammen, so dass mittels dieser Daten eine bereits sehr genaue Voreinstellung der Druckmaschine möglich ist. Etwaige vom Bediener der Druckmaschine vorgenommene Korrekturen der Einstellwerte werden nach erfolgter Korrektur ebenfalls in der Speichereinrichtung 1 aufgezeichnet.

Auch diese Werte kann sich der Bediener der Druckmaschine in der Anzeigevorrichtung 8 darstellen lassen. Ausserdem kann er eine ebenfalls abfragbare Maschinennummer (Nummer der benutzten Druckmaschine) beispielsweise für Kontrollzwecke eingeben. Mittels Eingabe einer Codezahl, bei der mehrere Tasten der Folientastatur 52 in vorbestimmter Reihenfolge gedrückt werden müssen, können entsprechende Befehle ausgelöst werden, beispielsweise das Löschen des Inhaltes der Speichereinrichtung 1.

Die Batterie 16 ist nach dem Lösen eines Deckels 54 zugänglich. Damit sie ohne Datenverlust ausgewechselt werden kann, ist ihr zweckmässigerweise ein Kondensator parallel geschaltet, der nach dem Entfernen der Batterie 16 die Spannung noch einige Minuten aufrecht erhält. Werden als Speicherelement EEPROMS oder NV-RAMS verwendet, so wird eine Batterie nicht mehr benötigt.

Die Wirkungs- und Arbeitsweise des erfindungsgemässen Speichersystems - insbesondere der Programmablauf - werden nachfolgend näher erläutert.

Dabei wird eine serielle Datenübertragung vorausgesetzt, wobei - aus Gründen der Übertragungssicherheit - möglichst ein fehlertoleranter Code (Hamming) zur Anwendung kommen sollte. Dies hat den Vorteil, dass Übertragungsfehler nicht nur festgestellt, sondern zumindest teilweise auch behoben werden können.

Sinnvoll, jedoch nicht Bedingung ist, dass die Datenübertragung blockweise mit aufaddierter Prüfsumme erfolgt. Es ist zweckmässig, dass die elektronische Steuervorrichtung 4 (elektronisches Rechensystem) eine Plausibilitätsprüfung der abzuspeichernden Daten vornimmt, damit nicht übertragungsbedingte Fehler, beispielsweise ausserhalb eines vorgegebenen Bereiches liegende Werte, rechtzeitig erkannt und dadurch Folgefehler vermieden werden können.

Ein erkannter, jedoch nicht korrigierter Fehler erfordert eine Wiederholung der Datenübertragung. Bleibt diese Wiederholung der Datenübertragung aus, wird nach einer vorgegebenen Zeitspanne die Übertragung abgebrochen und der Vorzustand, d.h. der vor der Datenübertragung vorhandene Ausgangszustand des Speichersystems wiederhergestellt bzw. beibehalten.

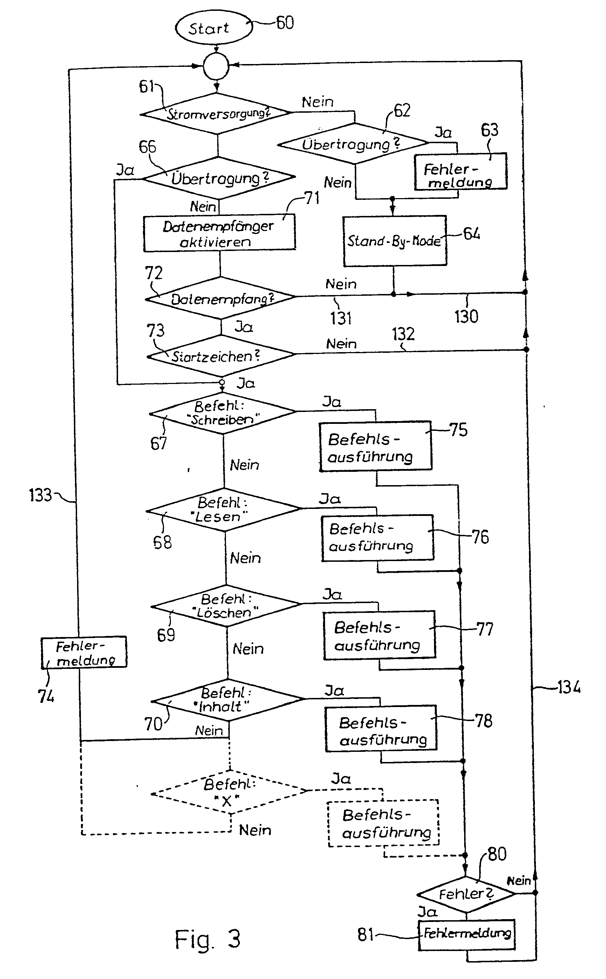

Das Flussdiagramm der Figur 3 zeigt einen Ablaufplan des Rahmenprogrammes der elektronischen Steuervorrichtung 4 mit selektiver Befehlsauswahl.

Die zum Arbeiten mit der Speichereinrichtung 1 erforderliche Betriebsenergie wird beispielsweise durch Einlegen der Batterie 16 oder eines Akkus in das Speichergehäuse 2 gewährleistet. Beim Startdialog 60 wird die Speichereinrichtung 1 initialisiert, beispielsweise alle programmierbaren Hardware-Elemente gesetzt oder das Inhaltsverzeichnis komplett gelöscht, falls es sich um eine bereits beschriebene Speichereinrichtung 1 handelt. Im Programmschritt 61 erfolgt eine Abfrage darüber, ob die Energieversorgung aktiv ist. Bei einer Verneinung dieser Frage fragt die elektronische Steuervorrichtung 4 in einem nächsten Programmschritt 62 an, ob bereits eine Datenübertragung läuft. Bei einer Bejahung dieser Frage wird eine Fehlermeldung 63 darüber ausgesendet, dass die Stromversorgung inaktiv, z.B. defekt ist. Dies könnte dadurch hervorgerufen worden sein, dass die Speichereinrichtung 1 während der Datenübertragung aus ihrer Aufnahmevorrichtung 12 an der Vorrichtung zum Kommunizieren 27 mit der Speichereinrichtung 1 entnommen wurde. In dem Fall, in dem die Speichereinrichtung 1 keinen eigenen Energiespeicher 16 aufweist und über die externe Energiespeiseeinrichtung 20 von aussen versorgt werden muss, wird dadurch die Energiezufuhr unterbrochen.

Sowohl eine Bejahung als auch eine Verneinung der Programmabfrage 62 führen dazu, dass ein Stand-By-Model 64 eingeleitet wird, d.h. alle nicht unbedingt benötigten Energieverbraucher werden ausgeschaltet und die Taktfrequenz der elektronischen Steuervorrichtung 4 vermindert. Nur die Eingabemöglichkeit zum Einschalten des Bar-Code-Lesers bleibt aktiv, falls die Speichereinrichtung 1 als solcher ausgebildet ist. Über eine Programmschleife 130 wird danach wiederholt die Energieversorgung 61 abgefragt. Sobald deren Aktivierung bejaht wird, wird in einem nächsten Programmschritt 66 überprüft, ob bereits eine Datenübertragung läuft.

Wird die Abfrage 66 nach einer bereits laufenden Datenübertragung verneint, so wird in einem fortlaufenden Programmschritt 71 der Stand-By-Mode aufgehoben und die Speichereinrichtung 1 bzw. deren Speicherelemente bereitgeschaltet, in der Form, dass der Lichtempfänger 21 aktiviert wird. Werden in einer nachfolgenden Programmabfrage 72 keine Daten empfangen, so wird über eine Programmschleife 131 so lange wiederholt abgefragt, bis ein Datenempfang im Programmschritt 72 stattfindet. Um einen definierten Ausgangspunkt für eine Datenübertragung zu erhalten, muss nunmehr noch ein vereinbartes Start-Zeichen, z.B. über ein festgelegtes Bit-Muster, empfangen werden (Programmschritt 73). Ist dies nicht der Fall, dann läuft das Programm auf einer Programmschleife 132 weiter. Ist ein Start-Zeichen ordnungsgemäss empfangen worden, erfolgt die weitere Auswertung der Start-Information mittels der elektronischen Steuervorrichtung 4 über das Bit-Muster in der Weise, dass in dem jeweils Selektierten von mehreren möglichen Befehlen verzweigt wird. Im Flussdiagramm der Figur 3 sind beispielhaft unter der fortlaufenden Nummerierung 67–70 die Befehlscodes «Schreiben», «Lesen», «Löschen» und «Inhalt ausführen» angedeutet.

Wird kein derartiger Befehlscode empfangen, so kehrt das Programm einer grossen Programmschleife 133 unter Abgabe einer Fehlermeldung 74, beispielsweise dass ein Befehl nicht erkannt worden ist, in seine Start-Ausgangslage zurück. Wird jedoch einer der zuvor erwähnten Befehlscodes 67–70 registriert, wird über die Programmschritte 75–87 die jeweilige Befehlsausführung eingeleitet. Bei dieser Einleitung wird vermerkt, dass eine Datenübertragung läuft und welcher Befehl selektiert ist. Mit einer nachgeschalteten Fehlerabfrage 80 soll festgestellt werden, ob ein Fehler bei der Ausführung des Befehls aufgetreten ist. Sowohl bei Verneinung als auch Bejahung dieser Frage – bei letzterem unter Ausgabe einer Fehlermeldung 81 über eine Störung in der Befehlsausführung – kehrt das Programm über eine Programmschleife 134 in seine Start-Ausgangsposition zurück. Von dieser Start-Ausgangsposition werden wieder die Abfragen 61 und 66 durchlaufen und im Normalfall beide bejaht. Anschliessend erfolgt eine Verzweigung in die bereits selektierte Befehlsausführung 75–78. Eine weitere Alternative zum zuvor beschriebenen automatischen Datenaustausch zwischen Druckmaschine und Speichersystem besteht in der manuellen Befehlseinleitung durch den Bediener über die Folientastatur 52 oder den Bar-Code-Leser.

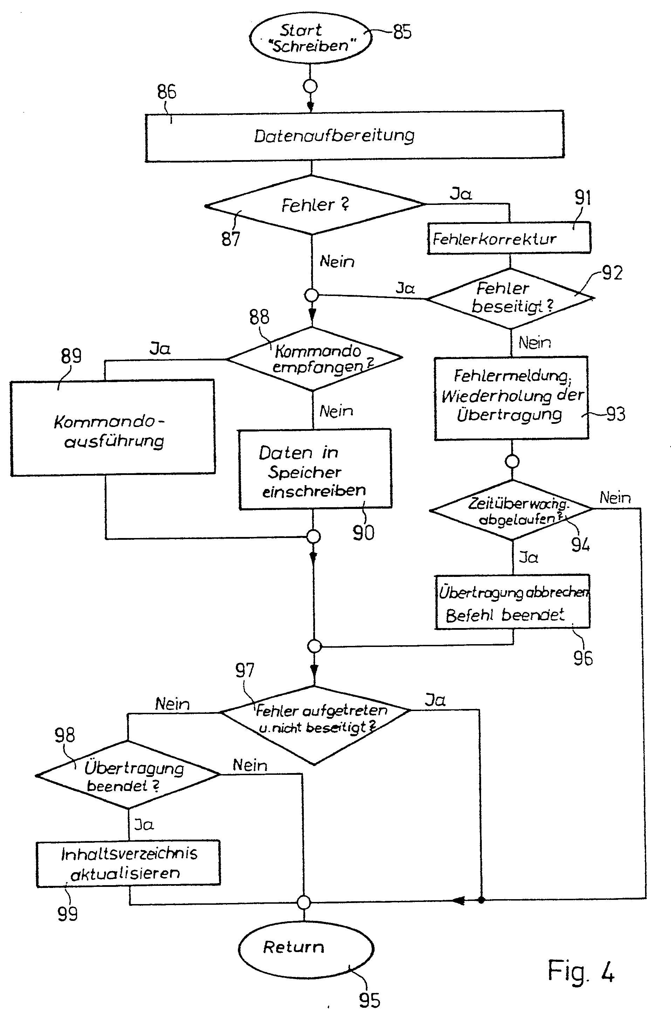

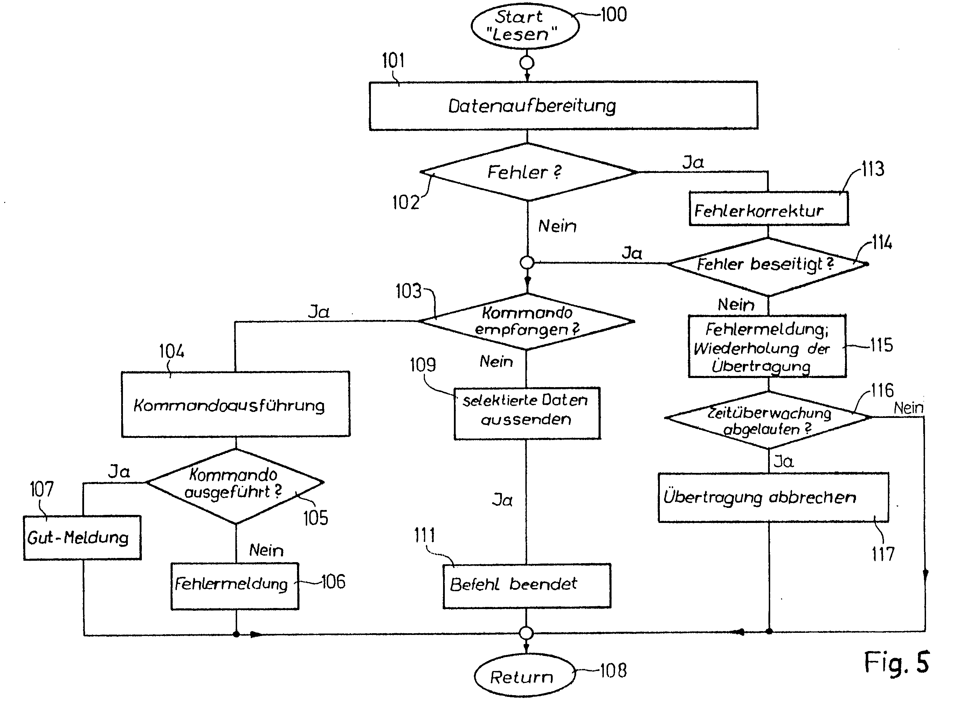

Als Beispiele sind die Programmabläufe der mit den Bezugsziffern 75 und 76 gekennzeichneten Befehlsausführungen «Schreiben» und «Lesen» in den Flussdiagrammen der Figure 4 und 5 ausführlich erläutert.

Der Start der Befehlsausführung «Schreiben» ist in Figur 4 mit der Bezugsziffer 85 gekennzeichnet. Im nachfolgenden Programmschritt 86 werden die vom Lichtsender 22 der Vorrichtung zum Kommunizieren 27 mit der Speichereinrichtung 1 ausgesandten und vom Lichtempfänger 21 des Dateneingangs der Speichereinrichtung 1 empfangenen Daten aufbereitet. Hierbei werden beispielsweise seriell empfangene Daten parallel gewandelt, sowie deren Plausibilität und Parität geprüft.

Eine Verneinung der nachfolgenden Abfrage 87 bezüglich der Feststellung von Fehlern in der Datenaufbereitung versetzt die elektronische Steuervorrichtung 4 in eine Wartestellung auf den Empfang eines von mehreren möglichen Kommandos 88, die zur korrekten Ausführung eines Schreibbefehls erforderlich sind. Wird ein derartiges Kommando registriert, so werden in einem nachfolgenden Programmschritt 89 die Voraussetzungen und Randbedingungen geschaffen, die zum Einschreiben von Daten erforderlich sind. Hierzu gehört die Vorbestimmung und Bereitstellung des notwendigen Speicherbereiches, beispielsweise für die Farbstellwerte eines Druckauftrages, die Normierung der Daten entsprechend der verwendeten Druckmaschine, die Anzahl der Farbzonen usw., die Anzeige des freien Speicherplatzes sowie die Aufhebung des Schreibschutzes usw. Letzterer dient dazu, dass abgespeicherte Daten nur durch ein up-Date, d.h. durch aktualisierte Werte – jedoch ausschliesslich vom gleichen Auftrag der gleichen Maschine usw. – überschrieben werden können.

Wird jedoch stattdessen in der Wartestellung des Programmschrittes 88 kein Schreibkommando empfangen, so kann es sich bei den vom Lichtsender 22 auf den Lichtempfänger 21 übertragenen Werten bereits nur um abzuspeichernde Daten handeln, die dann in den dafür bereitgestellten Speicherbereich eingeschrieben werden (Programmschritt 90).

Wird stattdessen bereits unmittelbar nach Programmbeginn ein Fehler in der Datenaufbereitung (Programmschritt 87) festgestellt, so wird nach erfolgter Fehlerkorrektur 91 die ordnungsgemässe Fehlerbeseitigung 92 abgefragt. Bei einer Bejahung dieser Frage wird zum Normalprogramm übergegangen und der Ablauf erfolgt wie zuvor beschrieben.

Ist der Fehler in der Datenaufbereitung gemäss Programmabfrage 92 nicht beseitigt worden, so wird eine Fehlermeldung 93 ausgegeben und eine Wiederholung der Datenübertragung angefordert, die nachfolgend zeitlich überwacht wird. Werden innerhalb einer vorgegebenen Zeitspanne der Zeitüberwachung 94 die angeforderten Daten wiederholt durchgegeben, dann springt das Programm über den Return 95 in seine Ausgangsposition zurück.

Läuft die Zeitüberwachung 94 jedoch ab, ohne dass die angeforderten Daten wiederholt übertragen wurden, dann wird die Datenübertragung abgebrochen und der Schreibbefehl als beendet betrachtet (Programmschritt 96). Den Programmschritten 89, 90 und 96 ist gemeinsam eine Fehlerabfrage 97 nachgeordnet, mittels der beim Einschreiben der Daten aufgetretene und nicht beseitigte Fehler festgestellt werden sollen. Bei diesen Fehlern kann es sich beispielsweise darum handeln, dass nicht genug Speicherplatz zum Einschreiben der Daten vorhanden war, dass die im Programmschritt 89 festgestellte Farbzonenanzahl nicht mit der Anzahl der übermittelten Werte des Druckmaschinenfarbwerks übereinstimmt, d.h. allgemein ausgedrückt, dass das empfangene Kommando 88 nicht ausführbar war. Ist dies der Fall, d.h. wird die Fehlerabfrage 97 mit «JA» beantwortet, kehrt das Programm über den Return 95 wieder in seine Startposition 85 zum nochmaligen Durchlauf zurück.

Sind eventuell aufgetretene Fehler jedoch korrigiert worden, erfolgt eine Abfrage 98 darüber, ob die Datenübertragung korrekt beendet wurde. Ist dies nicht der Fall, so kehrt das Programm ebenfalls über den Return 95 wieder in seine Startposition 85 zurück. Nur bei Abschluss einer korrekten Datenübertragung wird eine «Gut»-Meldung ausgegeben, und das Inhaltsverzeichnis aktualisiert (Programmschritt 99). Die Speichereinrichtung 1 ist nunmehr zum Start einer neuen Befehlsausführung bereit.

Im Programmablauf des Flussdiagramms der Figur 5 ist der Start der Befehlsausführung «Lesen» mit der Bezugsziffer 100 gekennzeichnet. Die weiteren Ablaufschritte 101 bis 104 in der Programmfolge entsprechen sinngemäss den Programmschritten 86 bis 89 der zuvor beschriebenen Befehlsausführung «Schreiben». Dabei müssen im Programmschritt 103 mehrere Kommandos empfangen werden, beispielsweise darüber, wie viele Daten übertragen werden, welcher Art diese Daten sind (Stellwerte für Farbzonen, Werte für Feuchte u.a.), Auftragskenndaten (Datum und Name des Auftrages) usw.

In der Abfrage 105 wird die korrekte Ausführung des vorangehenden Programmschrittes 104 überwacht, d.h. geprüft, ob die zum «Lesen» eines bestimmten Speicherinhaltes erforderlichen Voraussetzungen geschaffen wurden, beispielsweise die auszulesenden Daten in der Speichereinrichtung 1 gesucht und bereitgestellt, etc. Die Abfrage 105 kann beispielsweise dadurch verneint werden, dass der Suchvorgang nach dem zu lesenden Speicherplatz nicht erfolgreich war, dass ein Druckauftrag eines bestimmten Datums gesucht und nicht aufgefunden wurde, ganz allgemein, wenn die abgerufenen Daten nicht in der Speichereinrichtung 1 eingeschrieben waren. In diesem Fall wird eine Fehlermeldung 106 ausgegeben und das Programm läuft über einen Return 108 in eine Wartestellung auf einen neuen Befehl zurück.

Wird die Abfrage 105 mit «JA» beantwortet, so wird eine Gut-Meldung 107 ausgegeben und bei einer Wiederholung des Programms ebenfalls über den Return 108 können nun die selektierten Daten ausgesendet werden (Programmschritt 109). Der Anstoss hierzu kann beispielsweise mittels eines nicht als Kommando interpretierbaren Wertes, ein sogenanntes «Dummy» erfolgen. Nach einer vorgegebenen Zeitspanne wird im Programmschritt 110 abgefragt, ob die Datenübertragung ordnungsgemäss beendet ist. Ist dies der Fall, so ist auch der Lese-Befehl (Programmschritt 111) insgesamt beendet. Das Programm läuft über den Return 108 in das Rahmenprogramm auf eine Wartestellung für eine neue Befehlseingabe.

Die Programmschritte 113 bis 117 des rechten Astes des Flussdiagrammes der Figur 5 entsprechen sinngemäss im Programmablauf den Programmschritten 91 bis 96 des Flussdiagrammes der Figur 4. Wird die Übertragung des Auslesens eines bestimmten Speicherinhaltes im Programmschritt 117 abgebrochen, z.B. durch Herausnahme der Speichereinrichtung 1 aus ihrer Aufnahmevorrichtung 12, so gilt der Lese-Befehl als fehlerhaft beendet. Auch hier erfolgt über den Return 108 ein wiederholter Einsprung in die Ausgangsposition des Programms.

Es versteht sich von selbst, dass die Erfindung nicht auf das in der Beschreibung niedergelegte und in den Figuren dargestellte Ausführungsbeispiel beschränkt ist, das den Rahmen der Erfindung nicht eingrenzen soll. Selbstverständlich sind zahlreiche bauliche Abwandlungen, insbesondere die Verwendung wirkungsäquivalenter elektronischer Bausteine, beliebige Merkmalskombinationen der Patentansprüche sowie der Ausführungsformen der Erfindung und eine Vielzahl von Programmvariationen und Programmänderungen möglich.

Teilliste
1 Speichereinrichtung
2 Gehäuse
4 Steuervorrichtung
6 Speicher
8 Anzeigevorrichtung
10 Eingabevorrichtung
12 Aufnahmevorrichtung
14 Energieversorgungseinrichtung
16 Energiespeicher (Batterie)
18 Induktionsspule
19 Induktionsspule
20 Energiespeiseeinrichtung
21 Dateneingang (Sensor)
22 Lichtsender
24 Datenausgang (Ausgabeelement)
26 Lichtempfänger
27 Vorrichtung zum Kommunizieren
30 Schaltungsanordnung
32 Schnittstellenschaltung
34 Zwischenspeicher
35 Gehäuse
40 Sichtfenster
41 Sichtfenster
42 Sichtfenster
43 Sichtfenster
44 Eingang
45 Eingang
46 Schmalseite
47 Schmalseite
48 Oberseite
50 Anzeigefeld
52 Folientastatur
54 Deckel
60 Startdialog «Rahmenprogramm»
61 Abfrage: «Energieversorgung aktiv?»
62 Abfrage: «Laufende Datenübertragung?»
63 Fehlermeldung
64 Stand-By-Mode
66 Abfrage: «Laufende Datenübertragung?»
67 Befehlscode «Schreiben»
68 Befehlscode «Lesen»
69 Befehlscode «Löschen»
70 Befehlscode «Inhalt ausführen»
71 Datenempfänger aktivieren
72 Abfrage: «Datenempfang?»
73 Abfrage: «Start-Zeichen?»
74 Fehlermeldung
75 Befehlsausführung «Schreiben»
76 Befehlsausführung «Lesen»
77 Befehlsausführung «Löschen»
78 Befehlsausführung «Inhalt ausführen»
80 Fehlerabfrage
81 Fehlermeldung
85 Startdialog «Schreiben»
86 Datenaufbereitung
87 Fehlerabfrage
88 Abfrage: «Kommando empfangen?»
89 Kommandoausführung

90 Dateneinschreiben
91 Fehlerkorrektur
92 Abfrage: «Fehler beseitigt?»
93 Fehlermeldung und Wiederholung der Übertragung
94 Abfrage: «Zeitüberwachung abgelaufen?»
95 Return
96 Übertragung abbrechen
97 Fehlerabfrage
98 Abfrage: «Datenübertragung beendet?»
99 Inhaltsverzeichnis aktualisieren
100 Startdialog «Lesen»
101 Datenaufbereitung
102 Fehlerabfrage
103 Abfrage: «Kommando-Empfang?»
104 Kommandoausführung
105 Abfrage: «Kommando ausgeführt?»
106 Fehlermeldung
107 Gut-Meldung
108 Return
109 Selektierte Daten aussenden
110 Abfrage: «Zeitüberwachung abgelaufen?»
111 Befehl «Lesen» beendet
113 Fehlerkorrektur
114 Abfrage: «Fehler beseitigt?»
115 Fehlermeldung und Wiederholung der Übertragung
116 Abfrage: «Zeitüberwachung abgelaufen?»
117 Übertragung abbrechen
130 Programmschleife
131 Programmschleife
132 Programmschleife
133 Programmschleife
134 Programmschleife

**Patentansprüche**

1. Speichersystem zum Speichern von Einstellwerten für Stellvorrichtungen an Druckmaschinen, insbesondere von Verfahrens-, Programm- und Befehlsabläufen, sowie von allgemeinen Daten und Werten, unter Verwendung einer Speichereinrichtung (1) mit Speicherelementen (6), vorzugsweise elektrisch betriebenen Festkörperspeicher-Elementen, und einer Vorrichtung zum Kommunizieren (27) mit der Speichereinrichtung (1) und zum Übertragen der Speicherinformation, dadurch gekennzeichnet, dass die Speichereinrichtung (1) als transportabler Datenspeicher ausgebildet und mit zumindest einem Dateneingang in Form zumindest eines berührungslos arbeitenden Sensors (21) und mit zumindest einem Datenausgang in Form zumindest eines berührungslos abtastbaren Ausgabeelementes (24) ausgestattet ist, dass in der Speichereinrichtung (1) eine von aussen berührungslos speisbare Energieversorgungseinrichtung (14) vorgesehen ist, und dass mit den Speicherelementen eine, logische Entscheidungen treffende in der Speichereinrichtung (1) angeordnete, elektronische Steuervorrichtung (4) gekoppelt ist, wobei die Vorrichtung zum Kommunizieren (27) mit der Speichereinrichtung (1) an der Druckmaschien angeordnet ist und wobei ein bidirektionaler Datenverkehr zwischen der Speichereinrichtung (1) und der Vorrichtung zum Kommunizieren (27) zumindest im Halbduplex möglich ist, und dass in der Speichereinrichtung 1 eine Aufbereitung, Speicherung und Verwaltung der Speicherinformationen vorgesehen sind und bei der Datenaufbereitung eine Fehlererkennung, eine Fehlerkorrektur und eine Plausibilitätsprüfung stattfindet.

2. Speichersystem nach Anspruch 1, dadurch gekennzeichnet, dass die Speichereinrichtung (1) und/oder die Vorrichtung zum Kommunizieren (27) mit der Speichereinrichtung (1) mit einer Anzeigevorrichtung (8) ausgestattet ist, in der Speicherinformationen in numerischer und/oder graphischer Form, automatisch oder manuell ausgelöst, darstellbar sind.

3. Speichersystem nach Anspruch 1 oder 2, dadurch gekennzeichnet, dass die Speichereinrichtung (1) und/oder die Einrichtung zum Kommunizieren (27) mit der Speichereinrichtung (1) mit einer manuellen Eingabevorrichtung (10) ausgestattet ist.

4. Speichersystem nach Anspruch 3, dadurch gekennzeichnet, dass die manuelle Eingabeeinheit (10) mit einer Folientastatur (52) ausgestattet ist.

5. Speichersystem nach einem oder mehreren der vorangehenden Ansprüche, dadurch gekennzeichnet, dass zumindest der Dateneingang (Sensor 21) der Speichereinrichtung (1) derart ausgebildet ist, dass diese als Bar-Code-Leser anwendbar ist, wobei die elektronische Steuervorrichtung (4) mit einem zugehörigen Auswertprogramm versehbar ist.

6. Speichersystem nach einem oder mehreren der vorangehenden Ansprüche, dadurch gekennzeichnet, dass der Dateneingang (Sensor 21) und/oder der Datenausgang (Ausgabeelement 24) und/oder der Eingang (44, 45) der Energieversorgungseinrichtung (14) identisch sind, wobei die Speicherinformation dem Energieträger aufmoduliert ist.

7. Speichersystem nach einem oder mehreren der vorangehenden Ansprüche, dadurch gekennzeichnet, dass der Sensor (21) ein lichtempfindliches Element ist.

8. Speichersystem nach einem oder mehreren der vorangehenden Ansprüche, dadurch gekennzeichnet, dass das Ausgabeelement (24) ein lichtemittierendes oder durch Licht abtastbares Element ist.

9. Speichersystem nach einem oder mehreren der vorangehenden Ansprüche, dadurch gekennzeichnet, dass der Sensor (21) und/oder das Ausgabeelement (24) induktiv oder kapazitiv ansteuerbar bzw. abtastbar ist.

10. Speichersystem nach einem oder mehreren der vorangehenden Ansprüche, dadurch gekennzeichnet, dass der Sensor (21) ein Mikrofon und das Ausgabeelement (24) ein Schallsender ist.

11. Speichersystem nach einem oder mehreren der vorangehenden Ansprüche, dadurch gekennzeichnet, dass zur Erzeugung der Betriebsenergie der Speichereinrichtung (1) Energiestrahlung vorgesehen ist, wobei die Energieversorgungseinrichtung (14) mit einem strahlungsempfindlichen Element gekoppelt ist, das durch eine ausserhalb der Speichereinrichtung (1) angeordnete Strahlungsquelle bestrahlbar ist.

12. Speichersystem nach einem oder mehreren der vorangehenden Ansprüche 1 bis 10, dadurch gekennzeichnet, dass die Erzeugung der Betriebsenergie der Speichereinrichtung induktiver und/oder kapazitiver Art ist, wobei die Stromversorgungseinrichtung (14) eine Induktionsspule (18) und/oder Kondensatorplatte aufweist, mittels deren von ausserhalb des Speichergehäuses (2) auf induktivem bzw. kapazitivem Wege die Betriebsenergie zuführbar ist.

13. Speichersystem nach Anspruch 12, dadurch gekennzeichnet, dass die Induktionsspule (18) bzw. Kondensatorplatte nahe der Innenseite einer Aussenwand (47) des Speichergehäuses (2) angeordnet ist.

14. Speichersystem nach einem oder mehreren der vorangehenden Ansprüche 1 bis 10, dadurch gekennzeichnet, dass zur Erzeugung der Betriebsenergie der Speichereinrichtung (1) Schallenergie vorgesehen ist, wobei die Energieversorgungseinrichtung (14) ein Schallenergie in elektrische Energie umwandelndes Element aufweist, dem von einem ausserhalb der Speichereinrichtung (1) angeordneten Schallsender Schallenergie zuführbar ist.

15. Speichersystem nach einem oder mehreren der vorangehenden Ansprüche, dadurch gekennzeichnet, dass in dem Speichergehäuse (2) ein Energiespeicher (16) für die Energieversorung der Speicherelemente (6) zur Informationserhaltung vorgesehen ist, der vorzugsweise als Batterie ausgebildet ist.

16. Speichersystem nach einem oder mehreren der vorangehenden Ansprüche, dadurch gekennzeichnet, dass eine Dupliziereinrichtung zum Vervielfältigen der Speicherinformationen vorgesehen ist, in der sich die Dateneingänge (Sensoren 21) und Datenausgänge (Ausgabeelemente (24)) zweier Speichereinrichtungen (1) zur Informationsübertragung gegenüberstehen.

**Revendications**

1. Système de mémoire pour la mémorisation de valeurs de réglage de dispositifs de commande de machines d'impression, notamment de déroulements de processus, de programmes, et d'ordres, ainsi que de données et valeurs générales, en utilisant un dispositif de mémorisation (1) comportant des éléments de mémoire (6), de préférence des éléments de mémoire à corps solide activés électriquement, et un dispositif de communication (27) avec le dispositif de mémorisation (1) et de transmission des informations de mémoire, caractérisé en ce que le dispositif de mémorisation (1) est agencé comme une mémoire de données transportable et comporte au moins une entré de données, se présentant sous la forme d'au moins un capteur (21) opérant sans contact, et au moins une sortie de données se présentant sous la forme d'au moins un élément de sortie (24) pouvant être analysé sans contact, en ce qu'il est prévu dans le dispositif de mémorisation (1) un dispositif (14) d'alimentation en énergie pouvant être alimenté de l'extérieur sans contact, en ce que les éléments de mémoire sont reliés à un dispositif électronique de commande (4), situé dans le dispositif de mémorisation (1) et intervenant dans des décisions logiques, le dispositif de communication (27) avec le dispositif de mémorisation (1) étant disposé sur la machine d'impression et un transfert bidirectionnel de données entre le dispositif de mémorisation (1) et le dispositif de communication (27) étant possible au moins en demi-duplex, et en ce que dans le dispositif de mémorisation (1) sont effectuées une préparation, une mémorisation et une gestion des informations de mémoire et en outre, lors de la préparation des données, sont effectuées une détection d'erreur, une correction d'erreur et un contrôle de plausibilité.

2. Système de mémorisation selon la revendication 1, caractérisé en ce que le dispositif de mémorisation (1) et/ou le dispositif de communication (27) avec le dispositif de mémorisation (1) sont équipés d'un dispositif d'affichage (8) sur lequel peuvent être représentées des informations de mémoire sous une forme numérique et/ou graphique, avec commande automatique ou manuelle.

3. Système de mémorisation selon l'une des revendications 1 ou 2, caractérisé en ce que le dispositif de mémorisation (1) et/ou le dispositif de communication (27) avec le dispositif de mémorisation (1) sont équipés d'un dispositif d'entrée manuel (10).

4. Système de mémorisation selon l'une des revendication 3, caractérisé en ce que le dispositif d'entrée manuel (10) est équipé d'un clavier à touches à membrane (52).

5. Système de mémorisation selon une ou plusieurs des revendications précédentes, caractérisé en ce qu'au moins l'entrée de données (capteur 21) du dispositif de mémorisation (1) est agencée de telle sorte que celui-ci puisse être utilisé comme un lecteur de code en barres, le dispositif électronique de commande (4) pouvant alors être pourvu d'un programme d'évaluation associé.

6. Système de mémorisation selon une ou plusieurs des revendications précédentes, caractérisé en ce que l'entrée de données (capteur 21) et/ou la sortie de données (élément de sortie 24) et/ou l'entrée (44, 45) du dispositif d'alimentation en énergie (14) sont identiques, l'information de mémoire étant modulée sur le porteur d'énergie.

7. Système de mémorisation selon une ou plusieurs des revendications précédentes, caractérisé en ce que le capteur (21) est un élément photosensible.

8. Système de mémorisation selon une ou plusieurs des revendications précédentes, caractérisé en ce que l'élément de sortie (24) est un élément émetteur de lumière ou pouvant être analysé pour lumière.

9. Système de mémorisation selon une ou plusieurs des revendications précédentes, caractérisé en ce que le capteur (21) et/ou l'élément de sortie (24) peuvent être commandés ou analysés de façon inductive ou capacitive.

10. Système de mémorisation selon une ou plusieurs des revendications précédentes, caractérisé en ce que le capteur (21) est un microphone et l'élément de sortie 24 un émetteur acoustique.

11. Système de mémorisation selon une ou plusieurs des revendications précédentes, caractérisé en ce que, pour produire l'énergie de fonctionnement du dispositif de mémorisation (1), il est prévu un rayonnement d'énergie, auquel le cas le dispositif (14) d'alimentation en énergie est relié à un élément sensible au rayonnement, qui peut être irradié par une source de rayonnement disposée à l'extérieur du dispositif de mémorisation (1).

12. Système de mémorisation selon une ou plusieurs des revendications précédentes 1 à 10, caractérisé en ce que la génération de l'énergie de fonctionnement du dispositif de mémorisation est d'un type inductif et/ou capacitif, le dispositif (14) d'alimentation en courant comportant une bobine d'induction (18) et/ou une plaque de condensateur, à l'aide desquelles l'énergie de fonctionnement peut être introduite de l'extérieur du carter de mémoire (2) par une voie inductive ou capacitive.

13. Système de mémorisation selon la revendication 12, caractérisé en ce que la bobine d'induction (18) ou la plaque de condensateur est disposée à proximité du côté intérieur d'une paroi extérieure (47) du carter de mémoire (2).

14. Système de mémorisation selon une ou plusieurs des revendications précédentes 1 à 10, caractérisé en ce que, pour la géneration de l'énergie d'activation du dispositif de mémoire 1, il est prévu une énergie acoustique, le dispositif (14) d'alimentation en énergie comportant un élément convertissant l'énergie acoustique en énergie électrique et pouvant recevoir de l'énergie acoustique à partir d'un émetteur acoustique disposé à l'extérieur du dispositif de mémorisation (1).

15. Système de mémorisation selon une ou plusieurs des revendications précédentes, caractérisé en ce qu'il est prévu dans le carter de mémoire (2) un accumulatuer d'énergie (16) pour l'alimentation en énergie des éléments de mémoire (6) en vue d'une conservation d'information, cet accumulateur d'énergie étant avantageusement agencé comme une batterie.

16. Système de mémorisation selon une ou plusieurs des revendications précédentes, caractérisé en ce qu'il est prévu un dispositif de duplication pour une reproduction multiple des informations de mémoire, dispositif dans lequel les entrées de données (capteurs 21) et les sorties de données (éléments de sortie 24) de deux dispositifs de mémorisation (1) sont placées en regard les unes des autres pour une transmission d'informations.

## Claims

1. Storage system for storing setting values for adjusting devices on printing machines, particularly process, programm and command sequences, as well as general data and values, using a memory unit (1) with memory elements (6), preferably electrically operated solid-state memory elements, and a device (27) for communicating with the memory unit (1) and for transferring the stored data, characterized in that the memory unit (1) is designed as a portable data memory and is equipped with at least one data input in the form of at least one sensor (21) operating without contact and with at least one data output in the form of at least one output element (24) which can be scanned without contact, that in the memory unit (1) there is provided a power supply unit (14) which can be fed without contact from the outside, and that with the memory elements there is coupled an electronic control unit (4) making logic decisions, which is arranged in the memory unit (1), whereby the device (27) for communicating with the memory unit (1) is arranged at the printing machine, and whereby a bidirectional data communication between the memory unit (1) and the communicating device (27) is possible at least in half-duplex mode, and that in the memory unit (1) there is provided an intelligent facility for preparation, storage and management of the stored data and in the data preparation stage an error detection, error correction and plausibility check takes place.

2. Storage system according to Claim 1, characterized in that the memory unit (1) and/or the device (27) for communication with the memory unit (1) is equipped with a display (8) on which storage data can be displayed in numerical and/or graphic form by automatic or manual execution.

3. Storage system according to Claim 1 or 2, characterized in that the memory unit (1) and/or the device (27) for communicating with the memory unit (1) is equipped with a manual input unit (10).

4. Storage system according to Claim 3, characterized in that the manual input unit (10) is equipped with a touch-sensitive keypad (52).

5. Storage system according to one or several of the preceding claims, characterized in that at least the data input (sensor (21)) of the memory unit (1) is designed such that said memory can be used as a bar-code reader, whereby the electronic control unit (4) can be provided with a corresponding evaluation program.

6. Storage system according to one or several of the preceding claims, characterized in that the data input (sensor (21)) and/or the data output (output element (24)) and/or the input (44, 45) of the power supply unit (14) are identical, whereby the stored data is modulated upon the power supply unit.

7. Storage system according to one or several of the preceding claims, characterized in that the sensor (21) is a light-sensitive element.

8. Storage system according to one or several of the preceding claims, characterized in that the output element (24) is a light-emitting element or an element which can be scanned with light.

9. Storage system according to one or several of the preceding claims, characterized in that the sensor (21) and/or the output element (24) can be inductively or capacitively actuated or scanned.

10. Storage system according to one or more of the preseding claims, characterized in that the sensor (21) is a microphone and the output element (24) is a sound generator.

11. Storage system according to one or several of the preceding claims, characterized in that energy radiation is provided for generating the operating power of the memory unit (1), whereby the power supply unit (14) is linked to a radiation-sensitive element which is exposed to the radiation of a source arranged outside the memory unit (1).

12. Storage system according to one or several of the preceding claims, characterized in that the generation of the operating power for the memory unit is of an inductive and/or capacitive nature, with the power supply unit (14) featuring an induction coil (18) and/or capacitor plate, by means of which the operating power can be supplied from outside the memory housing (2) in an inductive or capacitive way.

13. Storage system according to Claim 12, characterized in that the induction coil (18) or capacitor plate is arranged near the inside of the outside wall (47) of the memory housing (2).

14. Storage system according to one or several of the preceding Claims 1 to 10, characterized in that sound energy is provided for generating the operating power for the memory unit (1), with the power supply unit (14) featuring an element which converts sound energy into electrical energy, and the sound energy can be fed to said element from a sound generator arranged outside the memory unit (1).

15. Storage system according to one or several of the preceding claims, characterized in that an energy accumulator (16) is provided in the memory housing (2) for the power supply of the memory elements (6) for data safeguarding, which preferably is designed in form of a battery.

16. Storage system according to one or several of the preceding claims, characterized in that a duplicating device is provided for copying the stored data, in which the data inputs (Sensors (21)) and data outputs (output elements (24)) of two memory units (1) are positioned opposite each other for data transfer.

Fig. 1

Fig. 2

Start — 60

61 — Stromversorgung? — Nein → 62 — Übertragung? — Ja → 63 — Fehler-meldung

Übertragung? — Nein

66 — Übertragung? — Ja

Nein

71 — Datenempfänger aktivieren

64 — Stand-By-Mode

72 — Datenempfang? — Nein → 131 / 130

Ja

73 — Startzeichen? — Nein → 132

Ja

67 — Befehl: "Schreiben" — Ja → 75 — Befehls-ausführung

Nein

68 — Befehl: "Lesen" — Ja → 76 — Befehls-ausführung

Nein

69 — Befehl: "Löschen" — Ja → 77 — Befehls-ausführung

Nein

133

74 — Fehler-meldung

70 — Befehl: "Inhalt" — Ja → 78 — Befehls-ausführung

Nein

Befehl: "X" — Ja → Befehls-ausführung

Nein

134

80 — Fehler? — Nein

Ja

81 — Fehlermeldung

Fig. 3

15

Start
"Schreiben" — 85

Datenaufbereitung — 86

Fehler ? — 87
Ja → Fehlerkorrektur — 91
Nein

Fehler beseitigt ? — 92
Ja
Nein

Kommando empfangen ? — 88
Ja → Kommando-ausführung — 89
Nein

Daten in Speicher einschreiben — 90

Fehlermeldung; Wiederholung der Übertragung — 93

Zeitüberwachg. abgelaufen ? — 94
Nein
Ja

Übertragung abbrechen Befehl beendet — 96

Fehler aufgetreten u. nicht beseitigt ? — 97
Nein
Ja

Übertragung beendet ? — 98
Nein
Ja

Inhaltsverzeichnis aktualisieren — 99

Return — 95

Fig. 4

Fig. 5